# EUROPÄISCHE PATENTANMELDUNG

(11) **EP 2 012 558 A2**
(43) Veröffentlichungstag der Anmeldung: **07.01.2009**
(21) Anmeldenummer: 08012163.5
(22) Anmeldetag: 04.07.2008
(51) Int. Cl.: H04S 7/00

(54) **Verfahren und Vorrichtung zum Ermitteln einer raumakustischen Impulsantwort in der Zeitdomäne**

(30) Priorität: 06.07.2007 DE 102007031677
(71) Anmelder: SDA Software Design Ahnert GmbH, 13189 Berlin (DE)
(72) Erfinder: Feistel, Stefan, 10409 Berlin (DE); Ahnert, Wolfgang, 13125 Berlin (DE); Miron, Alexandru Radu, 10967 Berlin (DE)
(74) Vertreter: Bittner, Thomas L.

(57) **Zusammenfassung**

Die Erfindung betrifft ein Verfahren und eine Vorrichtung zum Ermitteln einer raumakustischen Impulsantwort in der Zeitdomäne. Bei dem Verfahren werden ein akustisches Eingangssignal von einer akustischen Signalquelle in einen zu untersuchenden Akustikraum abgestrahlt, ein akustisches Ausgangssignal von einer akustischen Messeinrichtung in dem zu untersuchenden Akustikraum erfasst und von der akustischen Messeinrichtung einer Auswerteeinrichtung zugeführt und mittels der Auswerteeinrichtung aus einem dem akustischen Eingangssignal entsprechenden Referenzsignal und dem akustischen Ausgangssignals, bedarfsweise nach vorheriger Bearbeitung des akustischen Ausgangssignal, in Echtzeit eine raumakustische Impulsantwort des zu untersuchenden Akustikraums in der Zeitdomäne berechnet und für eine Ausgabe bereitgestellt, indem zeitlich parallel fortlaufend das akustische Eingangssignal abgestrahlt, das akustische Ausgangssignale erfasst und mittels der Auswcrtcvorrichtung die raumakustische Impulsantwort in der Zeitdomäne ermittelt wird.

## Beschreibung

Die Erfindung bezieht sich auf Technologien zum Ermitteln einer raumakustischen Impulsantwort in der Zeitdomäne.

### Hintergrund der Erfindung

Das Ermitteln einer akustischen Impulsantwort ist eine Aufgabe, die in Verbindung mit verschiedenen Anwendungen besteht. Hierzu gehören einerseits das nicht raumakustische Untersuchen eines Testsystems, beispielsweise das Charakterisieren von Lautsprechern oder anderen akustischen Signalquellen, und andererseits das raumakustische Untersuchen eines Testsystems, insbesondere das Analysieren der Akustik von Räumlichkeiten, bei dem eine raumakustische Impulsantwort oder akustische Raumimpulsantwort ermittelt wird.

Üblicherweise wird beim Ermitteln einer akustischen Impulsantwort ein Eingangssignal von einer akustischen Signalquelle bereitgestellt und abgestrahlt. Im Fall der Lautsprecheranalyse wird das Eingangssignal von dem Lautsprecher abgestrahlt. Das eingespeiste akustische Eingangssignal "faltet sich" mit der lmpulsantwort des zu analysierenden Systems. Es entsteht ein akustisches Ausgangssignal. Bei der Untersuchung von Räumlichkeiten kann das akustische Ausgangssignal dann mit einer akustischen Messeinrichtung, beispielsweise einem Mikrofon, gemessen werden.

Als auswertbare Signale liegen dann das akustische Eingangssignal und das akustische Ausgangssignal oder hiervon jeweils nach einer wahlweisen Bearbeitung abgeleitete, akustische Signale vor. Unter Verwendung eines bekannten mathematischen Apparates können die akustischen Signale fouriertransformiert werden in die Frequenzdomäne, so dass sich ergibt: A(ω) = E(ω) x H(ω), wobei A(ω) die Fouriertransformierte des gemessenen akustischen Ausgangssignals, E(ω) die Fouriertransformierte des akustischen Eingangssignals und H(ω) die Fouriertransformierte der noch unbekannten akustischen Impulsantwort sind. Nach einer Umstellung ergibt sich: H(ω) = A(ω) x E(ω)⁻¹. Mittels inverser Fouriertransformation lässt sich dann hieraus leicht die akustische Impulsantwort h(t) in der Zeitdomäne ermitteln.

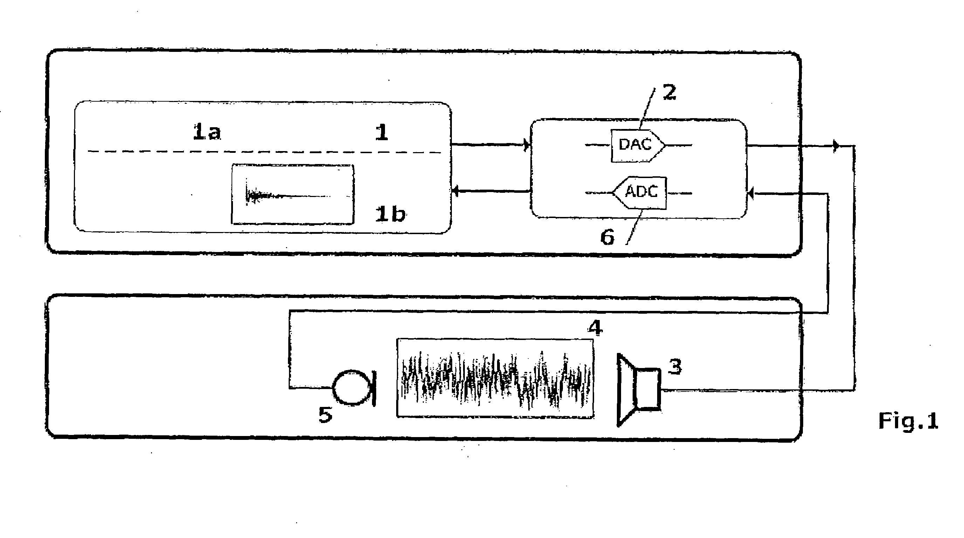

Fig. 1 zeigt eine schematische Darstellung zur Erläuterung einer bekannten Messanordnung zum Ermitteln einer akustischen Impulsantwort. Mit Hilfe einer einen Signalgenerator 1a und eine Auswerteinrichtung 1b umfassenden Steuereinrichtung 1 werden akustische Signale erzeugt, bei denen es sich beispielsweise um Rauschsignale, Sweeps (Gleitsinussignale), Sprachsignale oder Musiksignale handelt, die über einen Digital-Analog-Wandler 2 (D-A-Wandler) auf eine akustische Signalquelle 3 gegeben werden, über die ein akustisches Eingangssignal 4 abgegeben wird. Mit Hilfe einer als Mikrofon ausgeführten akustischen Messeinrichtung 5 wird ein akustisches Ausgangssignal erfasst und über einen Analog-Digital-Wandler 6 (A-D-Wandler) zur Auswerteeinrichtung 1b überführt, die bei der Darstellung in Fig. 1 gemeinsam mit einem Signalgenerator 1a integriert ist.

Bekannten Verfahren zum Ermitteln einer akustischen Impulsantwort ist gemeinsam, dass in einem Messschritt zunächst das akustische Ausgangssignal erfasst wird. In einem nachgelagerten Prozess wird dann, beispielsweise im Labor, die akustische Impulsantwort berechnet, sei es im Rahmen einer raumakustischen oder einer nicht raumakustischen Untersuchung. Dieses Verfahren wird auch als statisches Verfahren zum Ermitteln der Impulsantwort bezeichnet. Darüber hinaus ist für nicht raumakustische Untersuchungen, also beispielsweise in Verbindung mit der Charakterisierung von Laulsprechern, auch eine Echtzeitmessung von zeitlich kurzen, nicht raumakustischen Impulsantworten und Frequenzgängen bekannt. Hierbei können jedoch nur nicht raumakustische Impulsantworten ermittelt werden, die zeitlich auf eine Länge von höchstens ein bis zwei Sekunden beschränkt sind.

### Zusammenfassung der Erfindung

Aufgabe der Erfindung ist es, ein Verfahren und eine Vorrichtung zum Ermitteln einer raumakustischcn Impulsantwort in der Zeitdomäne zu schaffen, mit denen die Anwendungsmöglichkeiten derartiger Technologien bei der akustischen Charakterisierung von Testsystemen erweitert sind. Bestehende Limitierungen bei der Anwendung bekannter Verfahren zum Ermitteln von raumakustischen Impulsantworten sollen überwunden werden.

Diese Aufgabe wird erfindungsgemäß durch ein Verfahren zum Ermitteln einer raumakustischen Impulsantwort in der Zeitdomäne nach dem unabhängigen Anspruch 1 sowie eine Vorrichtung zum Ermitteln einer raumakustischen Impulsantwort in der Zeitdomäne nach dem unabhängigen Anspruch 14 gelöst. Erfindungsgemäß ist weiterhin ein computerlesbares Speichermedium mit hierauf gespeichertem Programmcode nach dem unabhängigen Anspruch 17 geschaffen, welcher konfiguriert ist, nach dem Laden in eine Computereinrichtung ein Verfahren zum Ermitteln einer raumakustischen Impulsantwort in der Zeitdomäne auszuführen.

Die Erfindung umfasst den Gedanken, eine raumakustische Impulsantwort in der Zeitdomäne zu erfassen, was auch als Ermittlung einer raumakustischen Impulsantwort bezeichnet werden kann, indem ein akustisches Eingangssignal von einer akustischen Signalquelle in einen zu untersuchenden Akustikraum abgestrahlt wird, bei dem ein akustisches Eingangssignal von einer akustischen Signalquelle in einen zu untersuchenden Akustikraum abgestrahlt wird, ein akustisches Ausgangssignal von einer akustischen Messeinrichtung in dem zu untersuchenden Akustikraum erfasst und von der akustischen Messeinrichtung einer Auswerteeinrichtung zugeführt wird und mittels der Auswerteeinrichtung aus einem dem akustischen Eingangssignal entsprechenden Referenzsignal und dem akustischen Ausgangssignal, bedarfsweise nach vorheriger Bearbeitung des akustischen Ausgangssignals, in Echtzeit eine raumakustische Impulsantwort des zu untersuchenden Akustikraums in der Zeitdomäne berechnet und für eine Ausgabe bereitgestellt wird, indem zeitlich parallel fortlaufend das akustische Eingangssignal abgestrahlt, das akustische Ausgangssignale erfasst und mittels der Auswertevorrichtung die raumakustische Impulsantwort in der Zeitdomäne ermittelt wird. Hierbei kann das dem akustischen Eingangssignal entsprechende Referenzsignal direkt aus dem akustischen Eingangssignal abgeleitet werden, beispielsweise im Fall des elektronischen Erzeugens des akustischen Eingangssignals, oder mit Hilfe einer Referenzsignalmesseinrichtung gemessen werden. Bei dem Akustikraum handelt es sich im Sinne der vorliegenden Erfindung um einen beliebigen Raum, für den zur Charakterisierung eine raumakustische Impulsantwort ermittelbar ist.

Mit Hilfe der Erfindung ist es ermöglicht, auch raumakustische Impulsantworten, das heißt akustische Raumimpulsantworten für einen Akustikraum, auf effiziente Art und Weise zu messen und so die akustischen Eigenschaften des untersuchten Akustikraums benutzerfreundlich zu analysieren, indem die raumakustische Impulsantwort in der Zeitdomäne in Echtzeit ermittelt und für eine Ausgabe bereitgestellt wird. Die bereitgestellte Ausgabe kann genutzt werden, um beispielsweise eine grafische Darstellung der berechneten, raumakustischen Impulsantwort auf einem Monitor zu erzeugen. Im Unterschied zu den bekannten statischen Messverfahren, bei denen in aufeinander folgend abgegrenzten Schritten eine akustische Messung und nach dessen Abschluss eine Ermittlung der akustischen Impulsantwort stattfindet, kann mit dem beschriebenen Verfahren auf dynamische Art und Weise eine Analyse des zu untersuchenden Akustikraums durchgeführt werden. Das Ermitteln der raumakustischen Impulsantwort in Echtzeit bedeutet in diesem Zusammenhang" dass noch während der fortgesetzten Messung der akustischen Ausgangssignale die Berechnung der raumakustischen Impulsantwort für während der Messung zuvor erfasste, akustische Ausgangssignale durchgeführt wird. Für eine vom Benutzer bestimmbare Dauer der akustischen Untersuchung werden zeitlich parallel fortlaufend akustische Eingangssignale abgestrahlt, akustische Ausgangssignale erfasst und mittels der Auswertevorrichtung die raumakustische Impulsantwort in der Zeitdomäne ermittelt. Diese Verfahrensschritte werden also wiederholt und in kontinuierlicher Art und Weise ausgeführt. Mögliche Änderungen der akustischen Verhältnisse oder ein Maß für deren Stabilität in dem untersuchten Raum können so unmittelbar erfasst werden.

Eine bevorzugte Weiterbildung der Erfindung sieht vor, dass die raumakustische Impulsantwort des zu untersuchenden Akustikraums einen Bereich des menschlichen Hörfrequezspektrums umfassend mit einer Länge von mehreren Sekunden ermittelt wird, bevorzugt mit einer Länge von etwa vier Sekunden bis etwa zehn Sekunden. Im Unterschied dazu sind bekannte Verfahren der Echtzeitanalyse für akustische Impulsantworten auf zeitliche Längen von höchstens zwei Sekunden begrenzt. Dieses ist auch die Ursache, weshalb bekannte Echtzeit-Verfahren in der Zeitdomäne nicht für tatsächliche Räumlichkeiten einsetzbar sind. Das menschliche Hörfrequenzspektrum umfasst akustische Signale von einer unteren Frequenz von etwa 15Hz bis zu einer oberen Frequenzgrenze von etwa 20 kHz.

Bei einer zweckmäßigen Ausgestaltung der Erfindung kann vorgesehen sein, dass die raumakustische Impulsantwort für einen eine Vielzahl von Menschen aufnehmenden Raum ausgewählt aus der folgenden Gruppe von Räumen ermittelt wird: Stadion, Zuschauerraum, Konzertsaal, Theatersaal, Auditorium, Vorlesungssaal, Messehalle, Bahnhofsgebäude, Flughafengebäude, Kirchengebäude, Mehrzweckhalle, offenes Gelände, Fabrikhalle oder dergleichen.

Eine vorteilhafte Ausführungsform der Erfindung sieht vor, dass das Ermitteln der raumakustischen Impulsantwort unter Verwendung einer Multi-Thread-Technologie in der Auswerteeinrichtung ausgeführt wird. Bei der Multi-Thread-Technologie handelt es sich um eine softwarebasierte Technik, mit der verschiedene benutzerdefinierbare Prozesse als unabhängige Aufgaben festgelegt und parallel, insbesondere auch gleichzeitig ausgeführt werden können. Mit Hilfe der vorgesehenen Nutzung der Multi-Thread-Technologie wird insbesondere die Nutzung von Multiprozessor-Systemen unterstützt.

Bevorzugt sicht eine Fortbildung der Erfindung vor, dass mittels einer automatischen, pegelgesteuerten Triggerung die Berechnung der raumakustischen Impulsantwort in der Auswerteeinrichtung unterbrochen wird, wenn das akustische Ausgangssignal einen benutzerdefinierbaren Triggerpegelwert für die Dauer einer benutzerdefinierbaren Triggerzeit unterschreitet. Bei akustischen Untersuchungen in größeren Räumlichkeiten, beispielsweise Konzertsälen oder Sportstadien, ist im besetzten Zustand häufig nicht möglich, optimierte, akustische Eingangssignale wie Gleitsinussignale zu verwenden. Stattdessen werden häufig regulär abgespielte Ansagen und Trailer genutzt. Um typische Pausen in diesen akustischen Eingangssignalen und hieraus entstehende Störanteile in dem akustischen Ausgangssignal zu kompensieren, ist die vorgeschlagene, pegelgesteuerte Triggerung nutzbar. Wenn aufgrund der auftretenden Pausen der Signalpegel des akustischen Ausgangssignals oder von hieraus abgeleiteten Signalen unter den vorgegebenen Triggerpegelwert fällt, werden folgende Signalanteile herausgefiltert und nicht für die Auswertung verwendet.

Bei einer vorteilhaften Ausgestaltung der Erfindung kann vorgesehen sein, dass die in Echtzeit ausgeführte Berechnung und Bereitstellung der raumakustischen Impulsantwort des zu untersuchenden Akustikraums in der Zeitdomäne unter Berücksichtigung von mehreren Eingangskanälen der Auswerteeinrichtung erfolgt, über die jeweilige akustische Ausgangssignale zugeführt werden, die mittels mehreren zugeordneten akustischen Messeinrichtungen in dem zu untersuchenden Akustikraum erfassten werden. Beispielsweise können bis zu sechs, vorzugsweise bis zu acht und weiter bevorzugt bis zu zehn Eingangskanäle in dem bei der Ermittlung der raumakustischen Impulsantwort ausgeführten, mathematischen Entfaltungsprozess einbezogen werden. Auf diese Weise können mehrere akustische Messeinrichtungen in dem zu untersuchenden Akustikraum an verschiedenen Orten verteilt gleichzeitig in Echtzeit ausgewertet werden. Beispielsweise können die akustischen Messeinrichtungen im Bereich von verschiedenen Sitzplätzen eines Stadions angeordnet werden.

Eine Weiterbildung der Erfindung kann vorsehen, dass die jeweiligen akustischen Ausgangssignale an mehreren Eingangskanälen der Auswerteeinrichtung berücksichtigt werden, indem hieraus berechnete, akustische Raumimpulsteilantworten gemittelt werden. Mit Hilfe der Mittlung der Signale an mehreren Eingangskanälen werden der Einlluss von störenden Signalanteilen minimiert und ein repräsentativer Frcqucnzgang des Raumes ermittelt.

Eine bevorzugte Weiterbildung der Erfindung sieht vor, dass ein das Ermitteln der raumakustischen Impulsantwort nachteilig beeinflussender Anteil aus einer ursprünglichen raumakustischen Impulsantwort, die aus den akustischen Ausgangssignale ermittelt wurde, herausgefiltert wird, indem mittels eines Erfassungszeitfensters ein gewünschter Anteil aus der ursprünglichen raumakustischen Impulsantwort für die Berechnung der raumakustischen Impulsantwort in der Auswerteeinrichtung ausgewählt wird. Störende und somit nachteilige Anteile der ursprünglichen Impulsantwort sind beispielsweise späte Reflexionen oder Störungen anderer Art. Bei dieser Ausführungsform ist insbesondere die Ermittlung eines Frequenzganges ermöglicht, der einer subjektiv wahrgenommenen, tonalen Balance entspricht und in der Zeitlänge auch mit für eine Richtungsortung maßgeblichen Bestandteilen der raumakustischen Impulsantwort korreliert.

Bei einer zweckmäßigen Ausgestaltung der Erfindung kann vorgesehen sein, dass das Erfassungszeitfenster hinsichtlich einer zeitliche Länge variabel eingestellt wird.

Eine vorteilhafte Ausführungsform der Erfindung sieht vor, dass die zeitliche Länge des Erfassungszeitfensters in Abhängigkeit von einer Frequenz der ursprünglichen raumakustischen Impulsantwort eingestellt wird. Die zeitliche Länge wird in einer Ausgestaltung umgekehrt proportional zur Frequenz eingestellt. Es können gleichzeitig alle Frequenzen ausgewertet werden. Die zeitliche Länge kann für alle ausgewerteten Frequenzen verschieden sein.

Bevorzugt sieht eine Fortbildung der Erfindung vor, dass das Erfassungszeitfenster hinsichtlich einer relativen zeitlichen Position zu einem Empfang der ursprünglichen raumakustischen Impulsantwort eingestellt wird.

Bei einer vorteilhaften Ausgestaltung der Erfindung kann vorgesehen sein, dass die relative zeitliche Position zum Empfang des akustischen Ausgangssignal eingestellt wird, um zeitlich am Anfang eintreffende Anteile der ursprünglichen raumakustischen Impulsantwort zu erfassen und zeitlich später eintreffende Anteile der ursprünglichen raumakustischen Impulsantwort herauszufiltern. In zeitlicher Hinsicht legt der Benutzer in Abhängigkeit von den Bedingungen vor Ort, zum Beispiel Raumgröße, Reflexionsfolge, Übertragungszweck, Sprache / Musik und dem subjektiven Empfinden fest, welche Anteile der ursprünglichen raumakustischen Impulsantwort einbezogen werden sollen. Bevorzugt wird eine Trennzeit bei etwa 50 bis etwa 80 ms genutzt.

Eine Weiterbildung der Erfindung kann vorsehen, dass das akustische Eingangssignal wenigstens eine akustische Signalart ausgewählt aus der folgenden Gruppe von akustischen Signalarten umfassend abgestrahlt wird: Rauschen, Sweep-Signal, Multiton-Signal, Sprachsignal und Musiksignal.

Das Verfahrens in einer der beschriebenen Ausgestaltungen und / oder die Vorrichtung können verwendet werden, akustische Parameter eines zu untersuchenden Akustikraumes zu ermitteln, wobei die akustischen Parameter aus der akustischen Raumimpulsantwort abgeleitet werden und wenigstens eine Messgröße ausgewählt aus der folgenden Gruppe von Messgrößen gemäß der Europäischen Norm EN ISO 3382:2000 (Fassung März 2000, Anhang A) umfassen: Stärkemaß. EDT ("*Early Decay Time*"), Nachhallzeit und Balance zwischen früh und spät eintreffender Energie. Alternativ oder ergänzend können die akustischen Parameter aus der akustischen Raumimpulsantwort abgeleitet werden und wenigstens eine Messgröße ausgewählt aus der folgenden Gruppe von Messgrößen gemäß der internationalen Norm IEC 60268-16 umfassen: Sprachverständlichkeitsmaß wie zum Beispiel STI ("*Speech Transmission Index*"), STIPa und RaSTI. Es handelt sich dann insoweit um ein Verfahren zum Ermitteln von akustischen Parametern eines zu untersuchenden Akustikraumes, bei dem die raumakustische Impulsantwort, welche in der Zeitdomäne in Echtzeit erfaßt wird, weitergehend ausgewertet wird, indem die in der europäischen oder der internationalen Norm definierten Meßgrößen zum Teil oder vollständig ermittelt werden. Das vorbeschriebene Verfahren ermöglicht auch eine Ermittlung sämtlicher in der europäischen Norm genannten Meßgrößen, da die erfaßte akustische Raumimpulsantwort bei der Erfassung mit dem vorgestellten Verfahren über einen ausreichenden "Informationsgehalt" zur Ermittlung der Meßgrößen verfügt. Es kann auch vorgesehen scin, die auf diese Weise ermittelten akustischen Parameter zusammen mit der akustischen Raumimpulsantwort zur Anzeige zu bringen. Die vorangehend genannten Meßgrößen sind aus der europäischen Norm als solche bekannt und dort auch definiert.

### Beschreibung von bevorzugten Ausführungsbeispielen der Erfindung

Die Erfindung wird im folgenden anhand von Ausführungsbeispielen unter Bezugnahme auf Figuren einer Zeichnung näher erläutert. Hierbei zeigen:
- Fig. 1: eine schematische Darstellung einer bekannten Anordnung zum Ermitteln einer akustischen Impulsantwort.
- Fig. 2: eine schematische Darstellung einer Anordnung zum Ermitteln einer raumakustischen Impulsantwort (akustischen Raumimpulsantwort) in der Zeitdomäne in Echtzeit, bei der als akustisches Eingangssignal eine dynamische Signalanregung mit breitbandigen Messsignalen genutzt wird,
- Fig. 3: eine schematische Darstellung einer Anordnung zum Ermitteln einer raumakustischen Impulsantwort in der Zeitdomäne in Echtzeit, bei der als akustisches Eingangssignal eine dynamische Signalanregung mit Musik- oder Sprachsignalen genutzt wird,
- Fig. 4: eine schematische Darstellung einer Anordnung zum Ermitteln einer raumakustischen Impulsantwort in der Zeitdomäne in Echtzeit, bei der als akustisches Eingangssignal eine externe dynamische Signalanregung mit Musik- oder Sprachsignalen genutzt wird,
- Fig.5: eine schematische Darstellung einer Anordnung zum Ermitteln einer raumakustischen Impulsantwort in der Zeitdomäne in Echtzeit mit mehreren akustischen Messeinrichtungen zum Erfassen von akustischen Ausgangssignalen, bei der als akustisches Eingangssignal eine externe dynamische Signalanregung mit Musik- oder Sprachsignalen genutzt wird,
- Fig. 6: eine schematische Blockdarstellung zum Ablauf eines Verfahrens zum Ermitteln einer raumakustischen Impulsantwort in der Zeitdomäne in Echtzeit,
- Fig. 7: eine schematische Blockdarstellung zum Erläutern eines Berechnungsmoduls,
- Fig. 8: eine schematische Blockdarstellung zum Erläutern von Berechnungspfaden bei dem Verfahren zum Ermitteln einer raumakustischen Impulsantwort in der Zeitdomäne in Echtzeit,
- Fig. 9: eine schematische Darstellung zur Verwaltung eines eingehenden Datenstroms in Verbindung mit einem akustischen Ausgangssignals und hiermit zusammenhängenden Aktualisierungsraten,
- Fig. 10: eine schematische Darstellung zum Erläutern einer automatischen, pegelgesteuerten Triggerung einer Berechnung der raumakustischen Impulsantwort in einer Auswerteeinrichtung, wodurch eine temporäre Ausschaltung eines Berechnungspfades bedingt ist,
- Fig. 11: eine schematische Darstellung zum Erläutern der Verwendung einer Multi-Thread-Technologie,
- Fig. 12: eine schematische Darstellung zum Erläutern der in Echtzeit ausgeführten Berechnung der raumakustischen Impulsantwort in der Zeitdomäne unter Berücksichtigung von mehreren Eingangskanälen der Auswerteeinrichtung und
- Fig. 13: eine schematische Darstellung zum Erläutern der Verwendung eines Erfassungszeitfensters, mit dem ein das Ermitteln der raumakustischen Imputsantwort nachteilig beeinflussender Anteil des akustischen Ausgangssignals herausgefiltert wird.

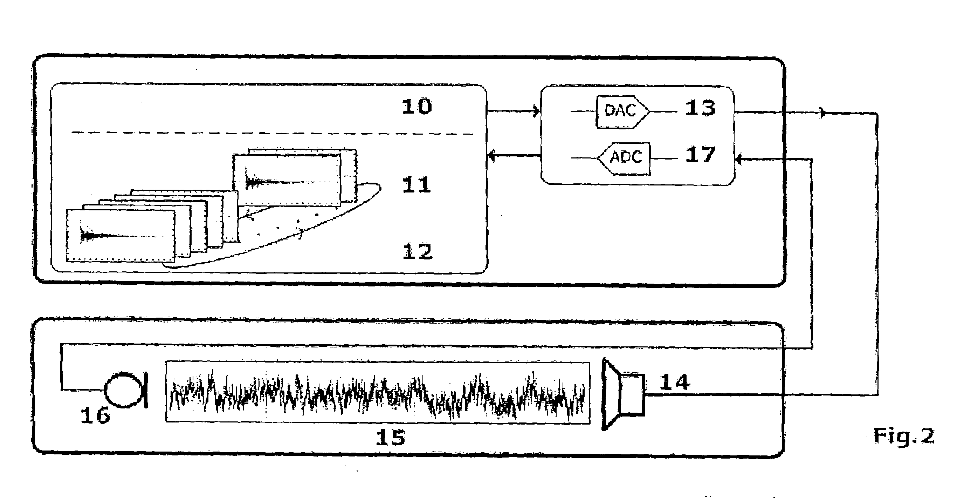

Nachfolgend werden bevorzugte Ausführungsbeispiele für ein Verfahren und eine Vorrichtung zum Ermitteln einer raumakustischen Impulsantwort (akustischen Raumimpulsantwort) für einen zu untersuchenden Akustikraum in der Zeitdomäne in Echtzeit unter Bezugnahme auf die Fig. 2 bis 13 erläutert. Für gleiche Merkmale werden in den Figuren gleiche Bezugszeichen verwendet.

Fig. 2 zeigt eine schematische Darstellung einer Anordnung zum Ermitteln einer raumakustischen Impulsantwort (akustischen Raumimpulsantwort) in der Zeitdomäne in Echtzeit, bei der als akustisches Eingangssignal eine dynamische Signalanregung mit breitbandigen Messsignalen genutzt wird.

Mit Hilfe einer einen Signalgenerator 10 und eine Auswerteinrichtung 11 umfassenden Steuereinrichtung 12 werden akustische Signale erzeugt, bei denen es sich beispielsweise um Rauschsignale, Sweeps, Sprachsignale oder Musiksignale handelt, die über einen Digital-Analog-Wandler 13 (D-A-Wandler) auf eine akustische Signalquelle 14 gegeben werden, über die ein akustisches Eingangssignal 15 abgegeben wird. Mit Hilfe einer als Mikrofon ausgeführten akustischen Messeinrichtung 16 wird ein akustisches Ausgangssignal erfasst und über einen Analog-Digital-Wandler 17 (A-D-Wandler) zur Auswerteeinrichtung 11 überführt, die bei der Darstellung in Fig. 2 gemeinsam mit einem Signalgenerator 10 integriert ist. Bei dem Ausführungsbeispiel in Fig. 2 sind der Signalgenerator 10 und die Auswerteinrichtung 11 integriert in der Steuereinrichtung 12 ausgeführt, sie können jedoch als getrennte Einrichtungen vorgesehen sein.

Ein dynamischer, akustischer Messvorgang wird auf einfachste Weise dadurch realisiert, dass als akustisches Eingangssignal ein breitbandiges Messsignal, beispielsweise in Form von Rauschsignalen oder Sweeps, in dem Signalgenerator I0, bei dem es sich zum Beispiel um einen Computer handelt, gespeichert ist. Dieses Messsignal wird über den D-A-Wandler 13 geführt und über die zweckmäßig als ein Lautsprecher ausgeführte, akustische Signalquelle 14 abgestrahlt in den zu untersuchenden Akustikraum. Mit Hilfe der in dem Akustikraum angeordneten, akustischen Messeinrichtung 16; die in dem Beispiel als ein Messmikrofon ausgeführt ist, wird dann das akustische Ausgangssignal erfasst und über den A-D-Wandler 17 der Auswerteinrichtung 11 zugeführt. Die Auswerteinrichtung 11 ermittelt nun die raumakustische Impulsantwort für den Akustikraum bis zu Impulslängen von etwa vier bis etwa zehn Sekunden und stellt das berechnete Ergebnis für eine weitere Verarbeitung zur Verfügung, beispielsweise für eine Anzeige auf einem Monitor (nicht gezeigt). Im Unterschied zu bekannten statischen Einmalmessungen erfolgt die Auswertung in Echtzeit dynamisch, d. h. auch beim Bewegen der akustischen Messeinrichtung 16 werden die Veränderungen der raumakustischen Impulsantwort oder einer komplexen Übertragungsfunktion wie Größe oder Signalstärke und Phase sofort angezeigt. Außerdem können akustische Maße wie Nachhallzeit oder Sprachverständlichkeit auch sofort ortsbezogen angezeigt werden.

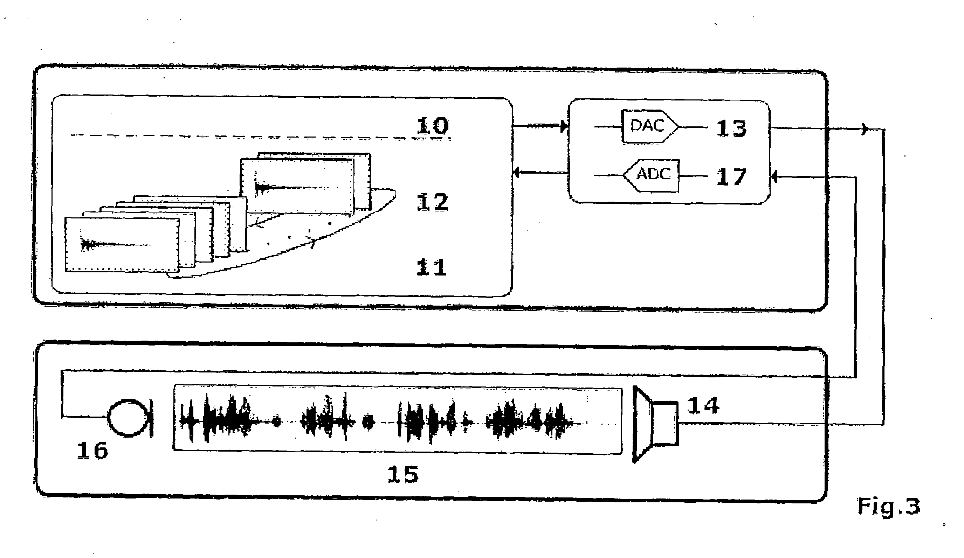

Fig. 3 zeigt eine schematische Darstellung einer Anordnung zum Ermitteln einer raumakustischen Impulsantwort in der Zeitdomäne in Echtzeit, bei der als akustisches Eingangssignal eine dynamische Signalanzegung mit Musik- oder Sprachsignalen genutzt wird.

Wie auch bei üblichen Einmalmessungen stört bei der akustischen Untersuchung die Ausstrahlung von Rausch- oder Sweep-Signalen, weshalb das Verfahren auch für die Anwendung von Sprach- oder Musiksignalen als akustische Eingangssignale konfiguriert ist. Die Signale sollten hinreichend kontinuierlich in der Zeit und breitbandig in der Frequenz sein. Gibt es Lücken im Zeitbereich oder Frequenzbereich, so greift gerade die beschriebene Triggerautomatik, um ein qualitativ optimales Meßergebnis zu ermöglichen. Hierbei werden von der akustischen Signalquelle 14 Sprach- oder Musiksignale abgestrahlt. Das akustische Ausgangssignal wird dann mittels der akustischen Messeinrichtung 16 erfasst. Auch mit diesen Messsignalen wird auf dynamische Weise die Raumimpulsantwort des Testsystems, nämlich des Raumes in Echtzeit gemessen.

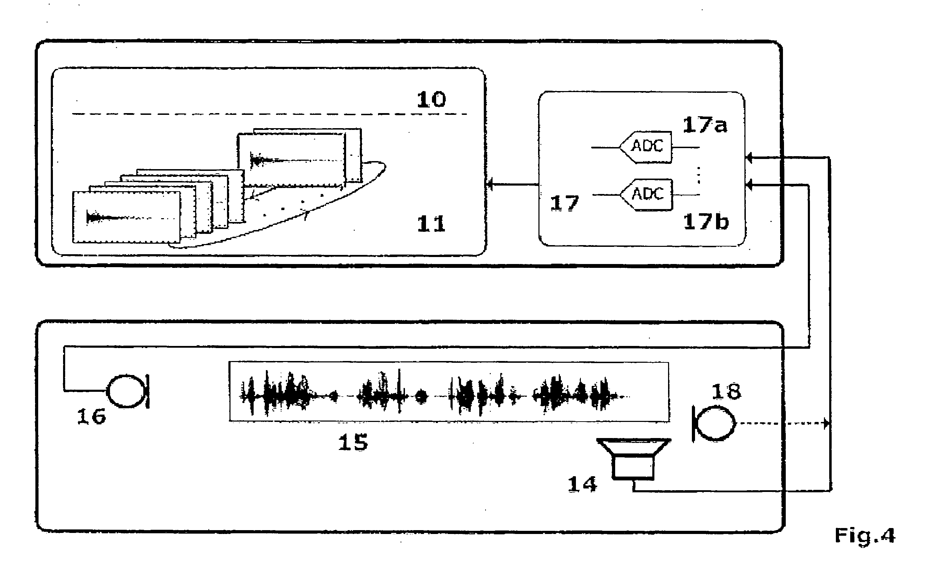

Fig. 4 zeigt eine schematische Darstellung einer Anordnung zum Ermitteln einer raumakustischen Impulsantwort in der Zeitdomäne in Echtheit, bei der als akustisches Eingangssignal eine externe dynamische Signalanregung mit Musik- oder Sprachsignalen genutzt wird.

Das Abstrahlen eigener Sprach- und Musiksignale ist jedoch nicht immer geeignet für besetzte Innenräumen oder Stadien, um akustische Parameter zu ermitteln. Es werden dann vom Veranstalter Signale oder Durchsagen eingespielt, die dem Charakter der Veranstaltung entsprechen, aber vom Messsystem nicht beeinflusst werden können. Bei der Ausführungsform nach Fig. 4 wird ein Eingang 17a des A-D-Wandlers 17 mit dem Signal des Veranstalters, zum Beispiel direkt aus dessen Speichereinheit oder vom Ausgang eines Mischpultes, gespeist, während einem anderen Kanal 17b des A-D-Wandlers 17 das im Saal oder Stadium aufgenommene akustische Ausgangssignal zugeführt wird. Auch ist es möglich, das Referenzsignal über ein Mikrofon 18 in Quellennähe zu gewinnen, nämlich in der Nähe der akustischen Signalquelle 14.

Wieder wird nun auf dynamische Weise in der Auswerteeinrichtung 11 mittels Echtzeitentfaltung schon während der Messung die raumakustische Impulsantwort angezeigt. Auch hier werden dynamisch die Änderungen im akustischen Verhalten unmittelbar sichtbar, wenn die akustische Messeinrichtung 16 bewegt wird. Mittelungen im Verarbeitungsprozess des Messsystems helfen, einen Signal-Störabstand zu verbessern.

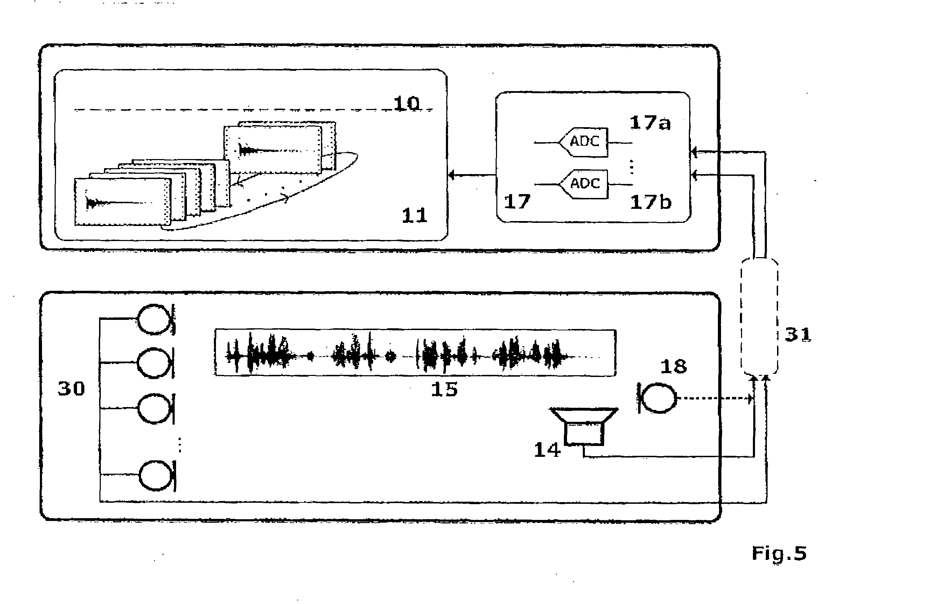

Fig. 5 zeigt eine schematische Darstellung einer Anordnung zum Ermitteln einer raumakustischcn Impulsantwort in der Zeitdomäne in Echtzeit mit mehreren akustischen Messeinrichtungen 30 zum Erfassen von akustischen Ausgangssignalen, bei der als akustisches Eingangssignal eine externe dynamische Signalanregung mit Musik- oder Sprachsignalen genutzt wird. Zur Steigerung der Effektivität der Messungen sind mehrere akustische Messeinrichtungen 30 vorhanden. Um den teilweise großen zeitlichen Versatz der verschiedenen Ausgangssignale, die in der Auswerteeinrichtung 11 eintreffen, zu berücksichtigen, ist bei dem Ausführungsbeispiel vorgesehen, die Eingangssignale für einige Kanäle, einschließlich eines Referenzsignals, zwischenzuspeichern (zu puffern) in einem Speicher 31, um dann nach der Aufnahme die zwischengespeicherten Werte zeitrichtig auszuwerten. Hierbei kann das Referenzsignal wieder ein elektrisches Signal sein, das von der Wiedergabeeinrichtung des Veranstalters kommt oder ein Sprechermikrofon vom Pult eines Redners oder ein Summenmikrofon eines Orchestermitschnittes, welches im Direktfeld des Orchesters aufgenommen wurde.

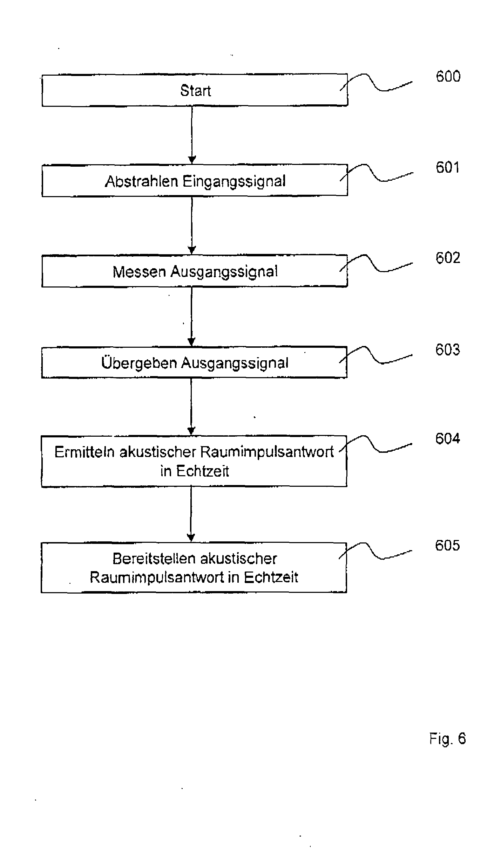

Nachfolgend wird das Verfahren zum Ermitteln einer raumakustischen Impulsantwort (akustischen Raumimpulsantwort) für einen zu untersuchenden Akustikraum in der Zeitdomäne in Echtzeit unter Bezugnahme auf die Fig. 6 bis 13 weiter erläutert.

Fig. 6 zeigt eine schematische Blockdarstellung zum Ablauf des Verfahrens zum Ermitteln einer raumakustischen Impulsantwort in der Zeitdomäne in Echtheit. Nach dem Start 600 wird ein akustisches Eingangssignal in einem Schritt 601 in den zu untersuchenden Akustikraum abgestrahlt. In dem zu untersuchenden Raum wird ein akustisches Ausgangssignal in einem Schritt 602 mittels der akustischen Messeinrichtung gemessen. Nach der Übergabe der gemessenen akustischen Ausgangssignale im Schritt 603 werden die akustischen Ausgangssignale im Schritt 604 unter Einbcziehung eines mathematischen Entfaltungsprozesses in der Auswerteeinrichtung ausgewertet, um in Echtzeit die raumakustische Impulsantwort in der Zeitdomäne zu ermitteln. Anschließend wird die ermittelte raumakustische Impulsantwort im Schritt 605 für eine Ausgabe in Echtzeit bereitgestellt, zum Beispiel für eine Ausgabe über eine Anzeigeeinrichtung. Noch während der fortgeführten Ausstrahlung von akustischen Eingangssignalen und der Erfassung von akustischen Ausgangssignalen werden Ergebnisse für die raumakustische Impulsantwort für den untersuchten Raum bereitgestellt.

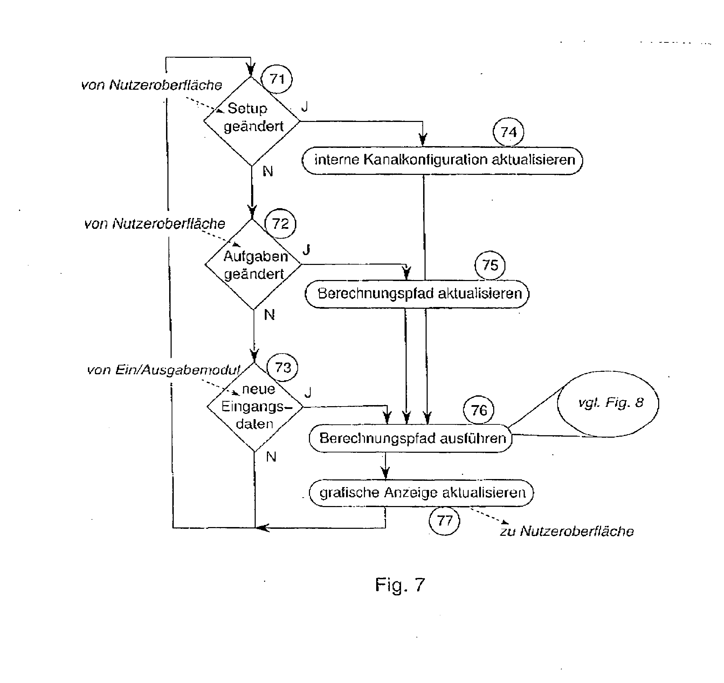

Nachfolgend werden einzelne nach dem dargestellten Ausführungsbeispiel in dem Verfahren zum Ermitteln der raumakustischen Impufsantwort in der Zeitdomäne in Echtzeit genutzte Technologien im Detail weiter erläutert unter Bezugnahme auf die Figuren 7 bis 13.

Fig. 7 zeigt eine schematische Blockdarstellung zum Erläutern eines Berechnungsmoduls.

Im Echtzeitbetrieb übernimmt ein Eingabe-Ausgabe-Modul fortlaufend eingehende Daten für die erfassten akustischen Ausgangssignale vom A-D-Wandler 17 (vgl. Fig. 2 bis 5 oben) in einen lokalen zirkulären Datenpuffer oder übersendet auszugebende Daten für die akustischen Eingangsignale an den D-A-Wandler 13 zur Verarbeitung in analoger Weise. Das Eingabe-Ausgabe-Modul arbeitet in einem eigenen, unabhängig definierten Prozess, was auch als Thread bezeichnet wird, parallel zum übrigen Mess- und Auswerteprogramm. Wenn neue Daten für die akustische Ausgangssignale verfügbar sind, werden andere Prozesse (Threads), die zum Beispiel der Berechnung oder der Darstellung der raumakustischen Impulsantwort dienen, benachrichtigt, was unten noch näher erläutert wird.

Fig. 7 verdeutlicht die Funktionsweise des Berechnungsmoduls. Das Berechnungsmodul läuft ebenfalls in einem eigenen Thread und kann mehrmals instanziert werden, sodass eine parallele Bearbeitung von mehreren Eingänge mit akustischen Ausgangssignalen erfolgen kann. Hier werden kontinuierlich Ereignisse der Nutzeroberfläche ausgewertet und die Daten vom Eingabe-Ausgabe-Modul bearbeitet.

Am Beginn des Verfahrens oder während des Betriebs kann der Nutzer eine Kanalkonfiguration 71 und / oder Berechnungsaufgaben 72 festlegen oder ändern. Daraufhin werden interne Datenstrukturen eines Berechnungsthreads aktualisiert 74 und ein entsprechende Berechnungspfad angelegt 75. Nach jeder Veränderung oder immer wenn neue Eingangsdaten verfügbar sind 73, wird der aktuelle Berechnungspfad ausgeführt 76 und eine grafische Anzeige aktualisiert 77, zum Beispiel der raumakustischen Impulsantwort.

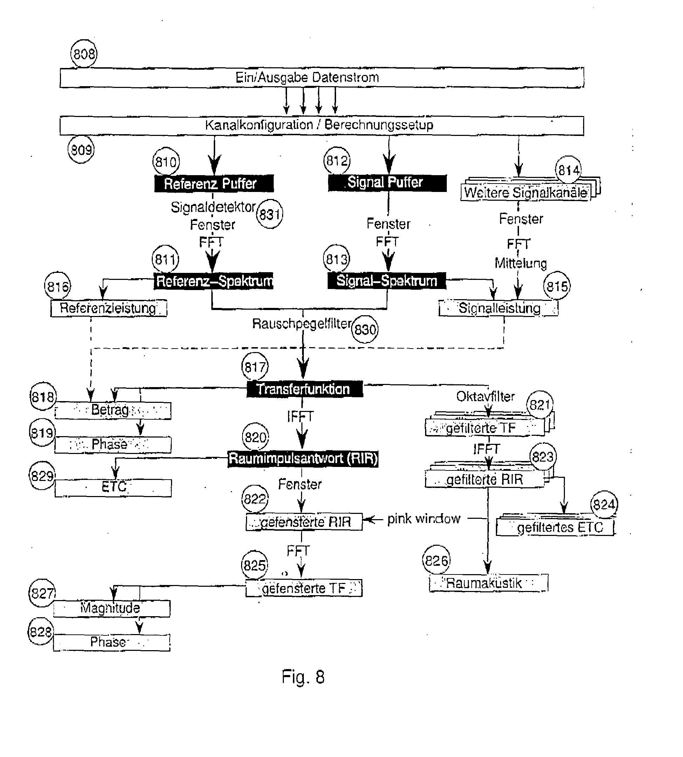

Fig. 8 zeigt eine schematische Blockdarstellung zum Erläutern von Berechnungspfaden bei dem Verfahren zum Ermitteln einer raumakustischen Impulsantwort in der Zeitdomäne in Echtzeit. Es sind mögliche Ergebnisse gezeigt, die aus dem auf dem akustischen Ausgangssignale basierenden Datenstrom abgeleitet werden können. Des weiteren sind notwendige Berechnungspfade für die Ermittlung der Ergebnisse schematisch dargestellt.

Wird ein Endergebnis, beispielsweise eine raumakustische Impulsantwort, vom Nutzer angefordert (vgl. Schritt 72 in Fig. 7), wird ein zugeordneter Pfad 808 → 809 → 810 → 811 → 812 → 813 → 817 → 820 aktiviert und der dafür benötigte Speicher vom Betriebssystem angefordert, also alloziert. Der Speicher für nicht benutzte Pfade wird vom Programm automatisch wieder freigegeben.

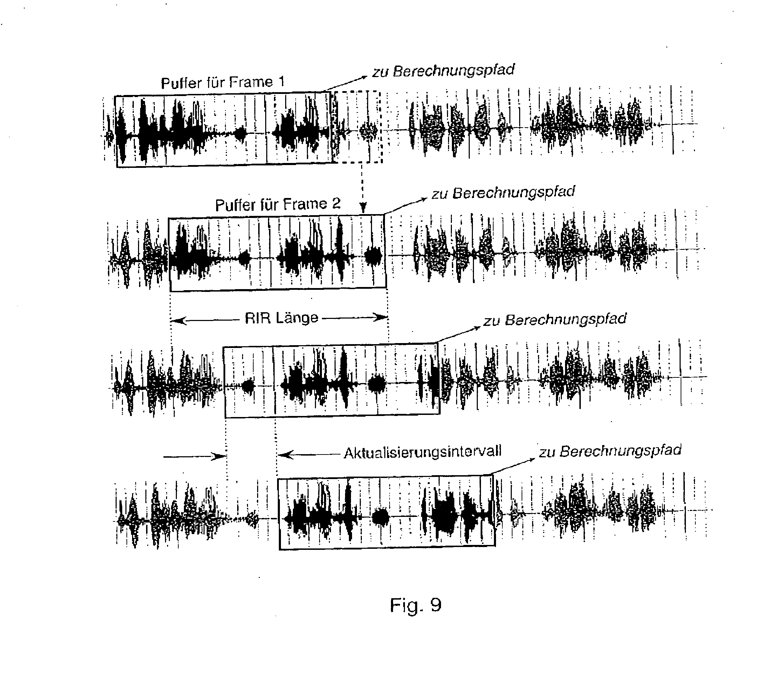

Bei jedem Durchlauf der Schritte in Fig. 7 werden neue Daten für die akustischen Ausgangssignale vom Eingabe-Ausgabe-Modul 808 entsprechend einer aktuellen Konfiguration 809 eingelesen und interne Referenz- und Signalpuffer 810, 812 aktualisiert. Diese sind als lokale Datenblöcke ausgeführt, die insgesamt die Länge der gewünschten raumakustischen Impulsantwort haben. Die Länge der aktualisierten Eingangsdaten entspricht der Zeitspanne zwischen nacheinander folgenden Ausführungen des Berechnungspfades. In der Regel sind dies Sekundenbruchteile, was viel kürzer ist als die Länge der raumakustischen Impulsantwort. Ein momentaner lokaler Signal/Referenz-Datenblock mit der Lange der raumakustischen Impulsantwort wird als 'Frame' bezeichnet (vgl. Fig. 9).

Es werden Kriterien definiert, wonach ein Frame sinnvolle Messdaten beinhaltet. Zum Beispiel soll ein durchschnittlicher Signalpegel über eine bestimmte Zeitdauer einen bestimmten Grenzwert überschreiten. Mittels einer Signaldetektor-Funktion 831 (vgl. auch Erläuterungen zur automatischen, pcgelgesteuerten Triggerung unten) werden alle Frames, die diese Kriterien nicht erfüllen, verworfen und die Berechnung bis zur nächsten Aktualisierung ausgesetzt. Andernfalls werden die Puffer gegebenenfalls gefenstert und Fourier-transformiert zu Referenz- und Signalspektren 811, 813. Daraus werden entsprechende Leistungsspektren 815, 816 berechnet. Bei Verwendung weiterer Signal- oder Eingangskanälen 814 (vgl. auch Erläuterungen zur Verwendung mehrerer Eingangskanäle unten) wird zusätzlich über alle Signalkanäle gemittelt.

Eine Transferfunktion 817 als zentrale Größe wird mittels komplexer Division des Signalspektrums 813 durch das Referenzspektrum 811 im Frequenzbereich berechnet. Hier ist die Zuschaltung von Filtern möglich, um bei der Messung Signalanteile nicht zuzulassen, die außerhalb eines zu messenden Frequenzbereiches liegen. Zuzüglich zum Frequenzpassfilter werden auch Rauschpegelfilter 830 angewendet, wobei ein relativer Beitrag solcher Frequenzen stark gemindert wird, die unter einem bestimmten relativen Pegelwert im Vergleich zum maximalen Pegel liegen (Wiener-Kriterium). Dazu werden effektiv auch Signalanteile der akustischen Ausgangssignale ausgeschaltet, die zwar im erlaubten Frequenzbereich liegen, aber nur Rauschen beinhalten. Der Nutzer kann Durchlassgrenzwerte eingeben. Die entsprechenden Filter werden dann auf die Übertragungsfunktion 817 angewendet.

Für die nun vorliegende Transferfunktion 817 werden Betrag 818, bedarfsweise unter Berücksichtigung eines Leistungsspektrums aus einer mehrkanaligen Mittelung und Phase 819 berechnet. Eine inverse Fouriertransformation einer Übertragungsfunktion 817 führt zu einer Raumimpulsantwort 820. Außerdem werden mittels Anwendung von Oktavfiltern bandgefilterte Transferfunktionen 821 berechnet, weiter via inverser Fouriertransformation dann die bandgefilterte Raumimpulsantworten 823. Aus der bandgefilterten Raumimpulsantwort 823 oder der breitbandigen Raumimpulsantwort 820 können anschließend bandgefilterte 824 oder breitbandige 829 ETCs (ETC - *"Energy Time Curve",* entspricht der quadrierten, logarithmisch dargestellten raumakustischen Impulsantwort) berechnet werden. Hicraus werden dann raumakustischen Parameter 826 bestimmt.

Eine weitere Verbesserung der Auswertung der akustischen Ausgangssignale zum Ermitteln der raumakustischen Impulsantwort besteht darin, für die Analyse der frühzeitig eintreffenden Anteile der akustischen Ausgangssignale ein Erfassungszeitfenster im Zeitbereich zu definieren (vgl. auch Erläuterungen unten zur Verwendung eines Erfassungszeitlensters). Das Erfassungszeitfenster wird so gesetzt, dass zwar ein Direktschall und erste Reflexionen Eingang in die Auswertung zur Ermittlung der raumakustischen Impulsantwort finden, jedoch nicht spätere Reflexionen und Störungen. Dieses Verfahren dient vor allem der Ermittlung eines Frequenzgangs, der der subjektiv wahrgenommenen tonalen Balance entspricht und in der Zeitlänge auch mit den für die Richtungsortung maßgeblichen Bestandteilen der raumakustischen Impulsantwort korreliert. Zu diesem Zweck wird die bandgefilterte Raumimpulsantwort 823 oder die breitbandige Raumimpulsantwort 820 gefenstert 822 und daraus eine zugehörige gefensterte Transferfunktion berechnet 825. Schließlich können aus der gefensterten Transferfunktion wiederum Betrag 827 und Phase 828 ermittelt und dargestellt werden.

Mittels effizienter Verwaltung der Berechnungsaufgaben kann der gesamte Vorgang zur Ermittlung der raumakustischen Impulsantwort in Sekundenbruchteilen ausgeführt werden, was eine hohe Aktualisierungsrate oder geringe Anzeigelatenz ermöglicht. Bei eingeschaltetem Mittelungsverfahren unter Verwendung mehrerer Eingangskanäle wird jedes dargestellte Ergebnis durch Mittelung über alle Frames in einer bestimmten Zeitspanne berechnet. Die effiziente Verwaltung wird zum Beispiel mittels Auswahl und Auskhrung von Berechnungsaufgaben nach dem Abhängigkeitsbaum in Fig. 8 erzielt, so dass die Berechnungen, die nicht auf dem Pfad vom Eingangssignal zum gewünschten Ergebnis liegen, nicht ausgeführt werden oder der dazu notwendige Speicher nicht allozicrt wird. Somit wird immer nur ein minimalnötige Speicher alloziert, oder die minimale Anzahl von Operationen pro Frame wird ausgeführt.

### Automatische, pegelgesteuerte Triggerung

Bei Messungen in Konzertsälen oder Stadien im besetzten Zustand ist es in der Regel nicht möglich, hoch optimierte Messsignale wie Gleitsinussignale oder Rauschsignale zu verwenden. Stattdessen können aber regulär abgespielte Ansagen und Trailer ausgenutzt werden, die in der Echtzeitentfaltung über einen elektronischen Eingang, nämlich als Signal direkt vom Mischpult, und einen oder mehrere akustische Eingänge, nämlich Raummikrofone, ausgewertet werden. Um die typischen Pausen zwischen Musikstücken und zwischen Sprachansagen und die entsprechend entstehenden Störanteile im Ergebnis zu kompensieren, ist eine Triggerautomatik vorgesehen, die die Berechnung der raumakustischen Impulsantwort bei zu geringem Eingangssignal zeitlich begrenzt aussetzt. Gleichzeitig ist auch die Entfaltung selbst so angepasst, dass fehlende Spektralanteile (so ist Sprache stark bandbegrenzt), aus der Berechnung der raumakustischen Impulsantwort ausgeblendet werden. So werden nur Anteile des eingehenden Datenstroms des akustischen Ausgangssignals für die Auswertung verwendet, die tatsächlich ein relevantes Signal beinhalten.

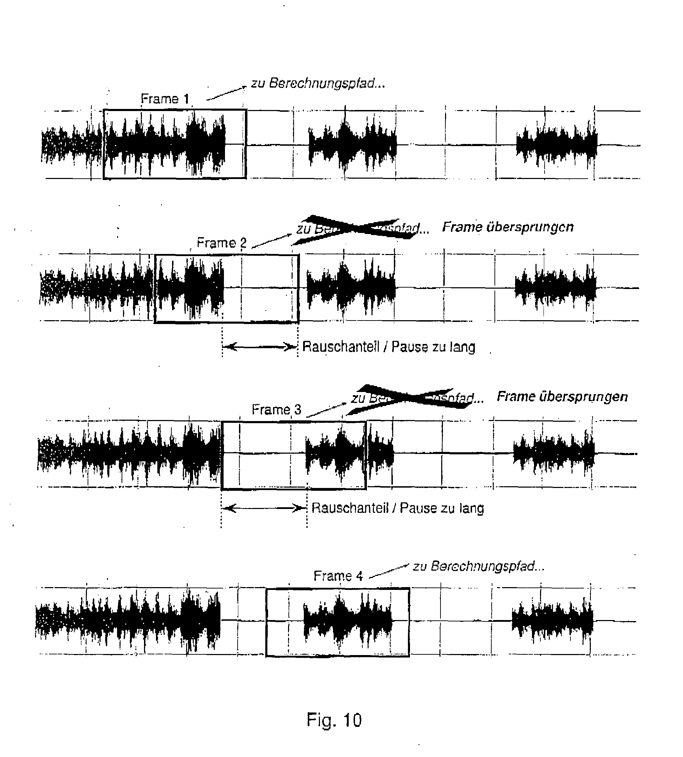

Fig. 10 zeigt eine schematische Darstellung zum Erläutern einer solchen automatischen, pegelgesteuerten Triggerung einer Berechnung der raumakustischen Impulsantwort in einer Auswerteeinrichtung, wodurch eine temporäre Ausschaltung eines Berechnungspfades bedingt ist. Wenn die Eingangsleistung des akustischen Ausgangssignals über einen bestimmten, vom Nutzer definierten Zeitraum einen bestimmten Schwellenwert unterschreitet (vgl. in Fig. 10 Frames 102 und 103), dann wird die weitere Berechnung der raumakustischen Impulsantwort bis zu dem Zeitpunkt ausgeschaltet, an dem der Rauschanteil des jeweiligen Frames kleiner als ein benutzerdefinierter Grenzwert wird.

### Multi-Thread-Technologie

Die Ausnutzung einer Multi-Thread-Technologie ermöglicht die Verwendung von jeweils unabhängigen Rechen-Threads oder Rechenprozessen für ein sogenanntes Stream-Buffering, die Berechnung, grafische Darstellungen und die Nutzeroberfläche. Dadurch können standardmäßig oder vom Benutzer definierte abzuarbeitende Prozesse voneinander losgelöst und effizient durchgeführt werden. Gerade auf modernen Prozessorsystemen wird die Multi-Thread-Technologie hardwarenah unterstützt und erlaubt so erhebliche Performancegewinne. Gerade durch diese Aufteilung wird die Anwendung einerseits sehr schnell und bleibt andererseits auch bei hoher Last noch interaktiv und verliert keine Daten des kontinuierlich laufenden Ein- und Ausgangs. Die Parallelisierung von Rechen- und Auswertungsfunktionen ist keine triviale Aufgabe. Die Möglichkeiten sind dabei immer stark von der Struktur der abzuarbeitenden Prozesse abhängig und erfordern eine genaue Anpassung sowie Synchronisierung. Ebenfalls können mehrere Datenströme wie Overlays oder auch im Prinzip andere Livc-Kanäle dann auf Multiprozessorsystemen parallel bearbeitet und angezeigt werden, indem für jeden Datenstrom ein separates, voll funktionsfähiges Thrcad angelegt wird.

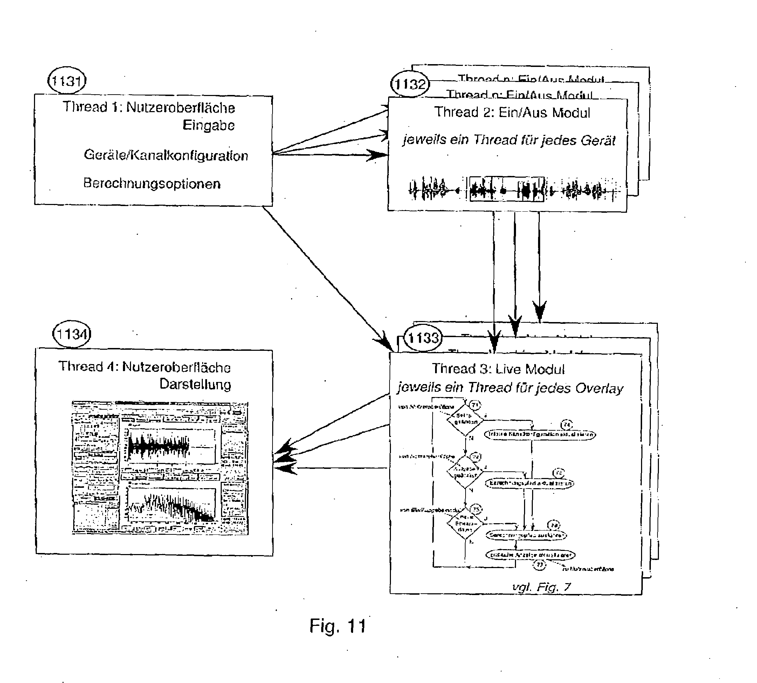

Fig. 11 zeigt eine schematische Darstellung zum Erläutern der Verwendung der Multi-Thread-Technologie. Die Interaktion mit dem Nutzer erfolgt in einem Nutzeroberflächen-Thread 1131, wo eine Messkonfiguration und Berechnungsoptionen vom Nutzer ausgewählt werden. Entsprechend werden ein oder mehrere Eingabe-Ausgabe-Threads 1132 gestartet, die eine Echtzeitinteraktion mit Eingabe-Ausgabe-Geräten verwalten. Berechnungsmodule 1133 werden auch vom Nutzeroberflächen-Thread 1131 instanziert. Sie werden von den Eingabe-Ausgabc-Modulen benachrichtigt, wenn neue Signale betreffend die akustischen Ausgangssignale vorliegen. Ihre Funktionsweise wurde oben in Fig. 7 näher erläutert. Wenn die Rechenergebnisse für einen aktuellen Frame vorliegen, werden sie in einem Anzeige-Thread 1134 dargestellt.

### Verwendung mehrerer Eingangskanäle

Eine Ausführung des Verfahrens sieht die Nutzung mehrerer Eingangskanäle der Auswerteeinrichtung gleichzeitig vor (vgl. auch Fig. 5 und zugehörige Erläuterungen oben), beispielsweise acht Eingangskanäle. Im Ergebnis können so acht komplexe Frequenzgänge gemittelt werden. Hierdurch lassen sich im Gegensatz zu bekannten "Ein-Platz" Messungen gleichzeitig mehrere Plätze, beispielsweise in verschiedenen Hörcrzonen im Stadion, auswerten und so ein repräsentativer (globaler) Gesamtfrequenzgang gewinnen. Das ist praktisch von hoher Bedeutung, da ein Equalizer immer auf ein Beschallungssystem als Ganzes wirkt und somit auch nur global angewendet werden kann. Zudem kann bei räumlich nicht korreliertem Störrauschen auch der Signal-Rausch-Abstand um bis zu 9 dB (acht Kanäle) erhöht werden.

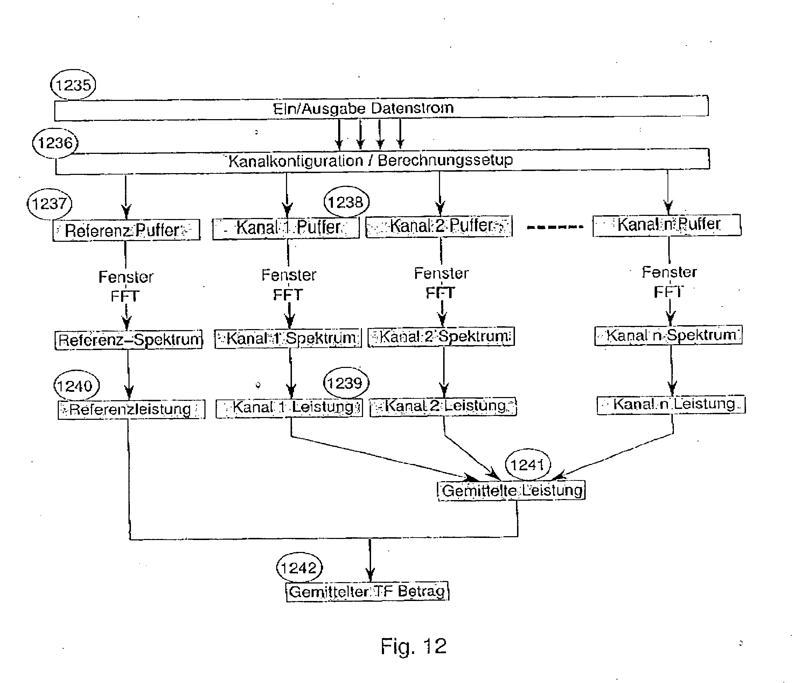

Fig. 12 zeigt eine schematische Darstellung zum Erläutern der in Echtzeit ausgeführten Berechnung der raumakustischen Impulsantwort in der Zeitdomäne unter Berücksichtigung von mehreren Eingangskanälen der Auswerteeinrichtung (vgl. auch Fig. 5). Eingangsdaten 1235 werden entsprechend einer Kanalkonfiguration 1236 einem Referenzpuffer 1237 oder Mehrkanalpuffern 1238 zugeordnet. Jeder Kanal wird gefenstert und fouriertransformiert. Dann werden Leistungsspektren 1239 gemittelt 1241. Mittels Division durch das Leistungsspektrum eines Referenzkanals 1240 entsteht ein gemittelte Betrag der Transferfunktion TF 1242. Die Transferfunktion ist die Fouricrtransformierte der raumakustischen Impulsantwort.

### Verwendung eines Erfassungszeitfensters

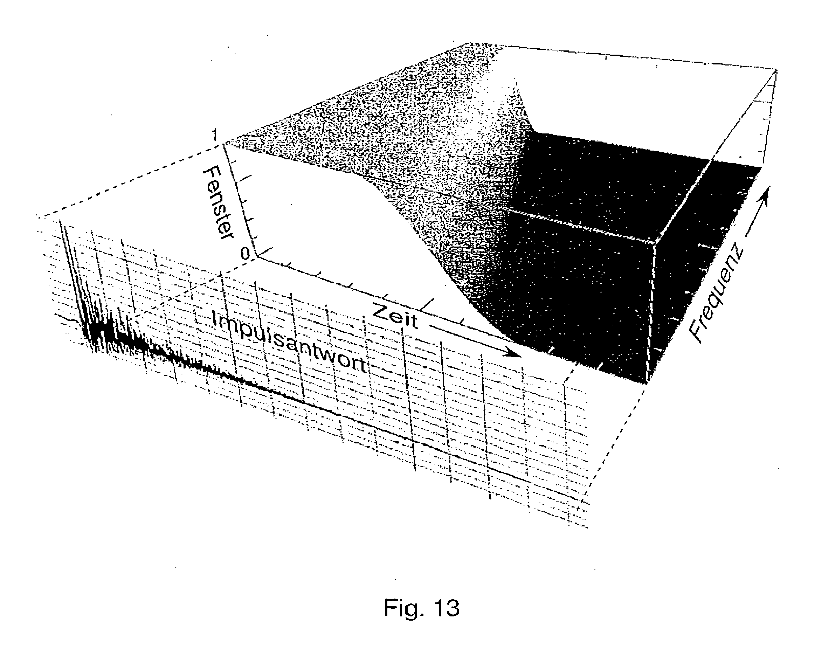

Zur Verbesserung der auswertbaren Daten ist eine Analyse von frühzeitig eintreffenden Anteile einer ursprünglichen raumakustischen Impulsantwort vorgesehen, die ihrerseits aus dem akustischen Ausgangssignals abgeleitet ist. Hierzu ist ein Erfassungszeitfenster im Zeitbereich zu definieren. Das Erfassungszeitfenster wird so gesetzt, dass zwar ein Direktschall und erste Reflexionen Eingang in die Auswertung finden, jedoch nicht spätere Reflexionen und Störungen. Diese Maßnahme dient vor allem der Ermittlung eines Frequenzgangs, der einem subjektiv wahrgenommenen, tonalen Balance entspricht und in der Zeitlänge auch mit für die Richtungsortung maßgeblichen Bestandteilen der raumakustischen Impulsantwort korreliert. Zur Verbesserung des gemessenen Anteils von akustischen Ausgangssignalen tiefer Frequenzen, die im Vergleich zu den hochfrequenten Spektralanteilen zeitlich ausgedehnter eintreffen, wird zudem ein Erfassungszeitfenster verwendet, dessen Zeitlänge sich mit der Frequenz ändert, das heißt für tiefe Frequenzen deutlich länger ist und für hohe Frequenzen kürzer. In der Regel hat die Fensterfunktion ungefähr die halbe Zeitlänge für eine doppelt so hohe Frequenz. Dadurch, dass im beschriebene Verfahren die raumakustische Impulsantwort in Echtzeit ermittelt und dargestellt wird, ist eine exakte Platzierung und Konfiguration des Erfassungszeitfensters durch den Nutzer direkt und einfach möglich. Bevorzugt wird das Erfassungszeitfenster als in parametrisierter, funktionaler Form "Fenster(Zeit t, Frequenz f)" gebildet, die ein kontinuierliches Erfassungszeitfenster im Zeit-Frequenz-Raum darstellt (vgl. Fig. 13).

Für jede Frequenz wird die raumakustische Impulsantwort mit einem zugeordneten Erfassungszeitfenster multipliziert. Anschließend wird der Fourierkoeffizient mittels Einzelpunkt-Founiertransformation berechnet. Da die Fensterlänge mit höherer Frequenz kleiner wird, kann der Prozess auch für größere zeitliche Langen der raumakustischen Impulsantwort mit hoher Performance durchgeführt werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Ermitteln einer raumakustischen Impulsantwort in der Zeitdomäne, bei dem ein akustisches Eingangssignal von einer akustischen Signalquelle in einen zu untersuchenden Akustikraum abgestrahlt wird, ein akustisches Ausgangssignal von einer akustischen Messeinrichtung in dem zu untersuchenden Akustilkraum erfasst und von der akustischen Messeinrichtung einer Auswerteeinrichtung zugeführt wird und mittels der Auswerteeinrichtung aus einem dem akustischen Eingangssignal entsprechenden Referenzsignal und dem akustischen Ausgangssignals, bedarfsweise nach vorheriger Bearbeitung des akustischen Ausgangssignal, in Echtzeit eine raumakustische Impulsantwort des zu untersuchenden Akustikraums in der Zeitdomäne berechnet und für eine Ausgabe bereitgestellt wird, indem zeitlich parallel fortlaufend das akustische Eingangssignal abgestrahlt, das akustische Ausgangssignale erfasst und mittels der Auswertevorrichtung die raumakustische Impulsantwort in der Zeitdomäne ermittelt wird.

2. Verfahren nach Anspruch 1 , **dadurch gekennzeichnet, dass** die raumakustische Impulsantwort des zu untersuchenden Akustikraums einen Bereich des menschlichen Hörfrequenzspektrums umfassend mit einer Länge von mehreren Sekunden ermittelt wird, bevorzugt mit einer Länge von wenigstens etwa zwei Sekunden bis etwa zehn Sekunden, bevorzugt von etwa vier Sekunden bis etwa zehn Sekunden.

3. Verfahren nach Anspruch 1 oder 2, **dadurch gekennzeichnet, dass** die raumakustische Impulsantwort für einen eine Vielzahl von Menschen aufnehmenden oder mit einer Vielzahl von Menschen besetzten Raum ausgewählt aus der folgenden Gruppe von Räumen ermittelt wird: Stadion, Zuschauerraum, Konzertsaal, Theatersaal, Auditorium, Vorlesungssaal, Messchalle, Bahnhofsgebäude, Flughafengebäude, Kirchengebäude, Mehrzweckhalle, offenes Gelände, Fabrikhalle oder dergleichen.

4. Verfahren nach mindestens einem der vorangehenden Ansprüche, **dadurch gekennzeichnet, dass** das Ermitteln der raumakustischen Impulsantwort unter Verwendung einer Multi-Thread-Technologie in der Auswerteeinrichtung ausgeführt wird.

5. Verfahren nach mindestens einem der vorangehenden Ansprüche, **dadurch gekennzeichnet, dass** mittels einer automatischen, pegelgesteuerten Triggerung die Berechnung der raumakustischen Impulsantwort in der Auswerteeinrichtung unterbrochen wird, wenn das akustische Ausgangssignal einen benutzerdefinierbaren Triggerpegelwert für die Dauer einer benutzerdefinierbaren Triggerzeit unterschreitet.

6. Verfahren nach mindestens einem der vorangehenden Ansprüche, **dadurch gekennzeichnet, dass** die in Echtzeit ausgeführte Berechnung und Bereitstellung der raumakustischen lmpulsantwort des zu untersuchenden Akustikraums in der Zeitdomäne unter Berücksichtigung von mehreren Eingangskanälen der Auswerteeinrichtung erfolgt, über die jeweilige akustische Ausgangssignale zugeführt werden, die mittels mehreren zugeordneten akustischen Messeinrichtungen in dem zu untersuchenden Akustikraum erfassten werden.

7. Verfahren nach Anspruch 6, **dadurch gekennzeichnet, dass** die jeweiligen akustischen Ausgangssignale an mehreren Eingangskanälen der Auswerteeinrichtung berücksichtigt werden, indem hieraus berechnete, raumakustische Impulsteilantworten gemittelt werden.

8. Verfahren nach mindestens einem der vorangehenden Ansprüche, **dadurch gekennzeichnet, dass** ein das Ermitteln der raumakustischen Impulsantwort nachteilig beeinflussender Anteil aus einer ursprünglichen raumakustischen Impulsantwort, die aus den akustischen Ausgangssignalen ermittelt wurde, herausgefiltert wird, indem mittels eines Erfassungszeitfensters ein gewünschter Anteil aus der ursprünglichen raumakustischen Impulsantwort für die Berechnung der raumakustischen lmpulsantwort in der Auswerteeinrichtung ausgewählt wird.

9. Verfahren nach Anspruch 8, **dadurch gekennzeichnet, dass** das Erfassungszeitfenster hinsichtlich einer zeitlichen Länge variabel eingestellt wird.

10. Verfahren nach Anspruch 9, **dadurch gekennzeichnet, dass** die zeitliche Länge des Erfassungszeitfensters in Abhängigkeit von einer Frequenz der ursprünglichen raumakustischen Impulsantwort eingestellt wird.

11. Verfahren nach mindestens einem der Ansprüche 8 bis 10, **dadurch** gekennzeichn e t, dass das Erfassungszeitfenster hinsichtlich einer relativen zeitlichen Position zu einem Empfang der ursprünglichen raumakustischen lmpulsantwort eingestellt wird.

12. Verfahren nach Anspruch 11, **dadurch gekennzeichnet, dass** die relative zeitliche Position zum Empfang des akustischen Ausgangssignal eingestellt wird, um zeitlich am Anfang eintreffende Anteile der ursprünglichen raumakustischen Impulsantwort zu erfassen und zeitlich später eintreffende Anteile der ursprünglichen raumakustischen Impulsantwort herauszufiltern.

13. Verfahren nach mindestens einem der vorangehenden Ansprüche, **dadurch gekennzeichnet dass** das akustische Eingangssignal wenigstens eine akustische Signalart ausgewählt aus der folgenden Gruppe von akustischen Signalarten umfassend abgestrahlt wird: Rauschen, Sweep-Signal, Multiton-Signal. Sprachsignal und Musiksignal.

14. Vorrichtung zum Ermitteln einer raumakustischen Impulsantwort in der Zeitdomäne, insbesondere zum Ausführen eines Verfahrens nach mindestens einem der vorangehenden Ansprüche, mit einer akustischen Signalquelle, die konfiguriert ist, ein akustisches Eingangssignal in einen zu untersuchenden Akustikraum abzustrahlen, einer akustischen Messeinrichtung, die konfiguriert ist, ein akustisches Ausgangssignal in dem zu untersuchenden Akustikraum zu erfassen, und einer Auswerteeinrichtung, die hardware- und softwaremäßig konfiguriert ist, von der akustischen Messeinrichtung das akustische Ausgangssignal zu empfangen und aus einem dem akustischen Eingangssignal entsprechenden Referenzsignal und dem akustischen Ausgangssignal, bedarfsweise nach vorheriger Bearbeitung des akustischen Ausgangssignal, in Echtzeit eine raumakustische Impulsantwort des zu untersuchenden Akustikraumes in der Zeitdomäne zu berechnen und für eine Ausgabe bereitzustellen, indem zeitlich parallel fortlaufend das akustische Eingangssignal abgestrahlt, das akustische Ausgangssignale erfasst und mittels der Auswertevorrichtung die raumakustischc Impulsantwort in der Zeitdomäne ermittelt wird.

15. Vorrichtung nach Anspruch 14, **dadurch gekennzeichnet, dass** die Auswerteeinrichtung konfiguriert ist, das Ermitteln der raumakustischen Impulsantwort unter Verwendung einer Multi-Thread-Technologie auszuführen.

16. Vorrichtung nach Anspruch 14 oder 15, **dadurch gekennzeichnet, dass** die Auswerteeinrichtung mehrere Eingangskanäle aufweist, denen jeweilige Auswertceingangssignale zugeführt werden, die aus zugeordneten und mit mehreren akustischen Messeinrichtungen in dem zu untersuchenden Akustikraum erfassten Ausgangssignalen abgeleitet sind.

17. Verwendung eines Verfahrens nach einem der Ansprüche 1 bis 13 und / oder einer Vorrichtung nach einem der Ansprüche 14 bis 16 zum Ermitteln von akustischen Parametern eines zu untersuchenden. Akustikraumes, wobei die akustischen Parameter aus der akustischen Raumimpulsantwort abgeleitet werden und wenigstens eine Messgröße ausgewählt aus der folgenden Gruppe von Messgrößen gemäß der Europäischen Norm EN ISO 3382:2000 (Fassung März 2000, Anhang A) umfassen: Stärkemaß, EDT *(_{"}Early Decay Time"*), Nachhallzeit und Balance zwischen früh und spät eintreffender Energie.

18. Computerprogramm-Produkt zum Ermitteln einer raumakustischen Impulsantwort in der Zeitdomäne in Echtzeit mit auf einem elektronischen Speichermedium aufgezeichneten Mitteln, die konfiguriert sind, beim Laden in einen Computer ein Verfahren nach mindestens einem der Ansprüche 1 bis 13 auszuführen.
